# EUROPÄISCHE PATENTSCHRIFT

(11) **EP 2 286 973 B1**
(45) Veröffentlichungstag und Bekanntmachung des Hinweises auf die Patenterteilung: **16.03.2016**
(21) Anmeldenummer: 10013953.4
(22) Anmeldetag: 14.08.2008
(51) Int. Cl.: B29B 13/10, B29B 17/04, B65G 11/20, B29B 17/00

(54) **Verfahren und Vorrichtung zur Behandlung von Kunststoffmaterial**
Method and device for treating plastic material
Procédé et dispositif destinés au traitement de matériaux synthétiques

(30) Priorität: 14.08.2007 AT 12762007
(43) Veröffentlichungstag der Anmeldung: 23.02.2011
(62) Teilanmeldung aus: 08782817.4
(73) Patentinhaber: EREMA Engineering Recycling Maschinen und Anlagen Gesellschaft m.b.H., 4052 Ansfelden (AT)
(72) Erfinder: Hackl, Manfred Dipl.-Ing., 4040 Linz-Urfahr (AT); Wendelin, Gerhard Mag., 4030 Linz (AT); Feichtinger, Klaus Dipl.-Ing., 4040 Linz (AT)
(74) Vertreter: Wildhack, Andreas

(56) Entgegenhaltungen:
- EP-A1- 0 004 935
- EP-A1- 0 649 340
- WO-A-2006/079128
- DE-A1- 2 547 008
- DE-B- 1 170 226
- GB-A- 834 892
- US-A- 1 636 033
- US-A- 2 762 572

## Beschreibung

Die Erfindung betrifft eine Vorrichtung gemäß dem Oberbegriff des Anspruchs 1 sowie ein Verfahren gemäß Anspruch 13.

Vorrichtungen zur Bearbeitung und Vorbehandlung von Kunststoffmaterial sind beispielsweise aus der EP 390 873 bekannt. Derartige Vorrichtungen arbeiten im allgemeinen befriedigend, es hat sich jedoch gezeigt, dass in manchen Fällen der Homogenisierungsgrad des über die Schnecke abgeführten Kunststoffmaterials nicht ausreichend ist, insbesondere in Bezug auf den erzielten Trocknungsgrad solcher Kunststoffmaterialien, die zur Vermeidung von Abbauprozessen bereits vor der Plastifizierung völlig trocken sein müssen, z.B. Polyester. Folien größerer Stärke erfordern zudem einen mit der Dicke zunehmenden gesteigerten Trocknungsaufwand, wodurch für derartiges Gut gesonderte Trockenvorgänge, z.B. mit dehydrierter Luft, in speziellen Trocknern notwendig sind. Diese Trockner arbeiten in einem Temperaturbereich, für den nur kristallisiertes Gut zulässig ist, amorphes Gut würde klebrig werden und zusammenbacken. Dies bedeutet, dass dem Trockenvorgang ein Kristallisiervorgang vorgeschaltet werden muss. Wird aber das zu bearbeitende Gut lange im Behälter durch das Werkzeug bearbeitet, dann entsteht bei kontinuierlichem Betrieb der Vorrichtung die Gefahr, dass einzelne Kunststoffteilchen schon sehr früh von der Austragsschnecke erfasst werden, andere Kunststoffteilchen jedoch erst sehr spät. Die früherfassten Kunststoffteilchen können dabei noch verhältnismäßig kalt und daher nicht ausreichend vorbehandelt, getrocknet, kristallisiert bzw. erweicht sein, wodurch es zu Inhomogenitäten im durch die Schnecke dem angeschlossenen Werkzeug, z.B. einem Extruder, zugeführten Material, kommen kann.

Zur Lösung dieses Problems wurden Vorrichtungen geschaffen, wie sie beispielsweise aus der AT 396 900 B bekannt sind. Durch derartige Vorrichtungen kann die Homogenität des Materials verbessert werden. Es sind zwei oder mehr Behälter in Serie angeordnet und das zu verarbeitende Kunststoffmaterial durchläuft diese Behälter der Reihe nach. Im ersten Behälter wird bereits vorzerkleinertes, vorgewärmtes, vorgetrocknetes und vorverdichtetes und somit vorhomogenisiertes Material erzeugt, das dem folgenden Behälter vorgelegt wird. Dadurch wird sichergestellt, dass kein unbehandeltes, das heißt kaltes, unverdichtetes, unzerkleinertes bzw. inhomogenes, Material direkt der Austragsschnecke bzw. dem Extruder zugeht. Allerdings sind derartige Vorrichtungen mit mehreren Behältern sperrig und haben einen großen Platzbedarf. Auch der konstruktive Aufwand, insbesondere in der Verbindung der Behälter, ist erheblich.

Es muss bei allen Behandlungsverfahren ständig berücksichtigt werden, dass die nicht oder mangelhaft behandelten Kunststoffanteile in der Schnecke inhomogene Kunststoffnester bilden, die der Qualität des Endproduktes abträglich sind. Will man daher Endprodukte, sei es Granulat oder zu Formen extrudierte Gegenstände, mit der gewünschten gleichbleibenden Qualität erhalten, so muss die das mangelhaft aufbereitete Material aus dem Aufnahmebehälter abtransportierende Schnecke das gesamte von ihr geförderte Material am Schneckenausgang auf die gewünschte Qualität und Temperatur bringen, um das Material mit der gewünschten Homogenität extrudieren zu können. Diese Ausgangstemperatur muss relativ hoch gehalten werden, um sicherzustellen, dass alle Kunststoffteilchen genügend plastifiziert sind. Dies wiederum bedingt einen erhöhten Energieaufwand und darüber hinaus die Gefahr, dass durch die relativ hohe Ausgangstemperatur thermische Schädigungen des Kunststoffmateriales z.B. Abbau der Molekülkettenlänge, zu befürchten sind.

Weiters ist aus dem Stand der Technik aus der AT 407 970 B eine Vorrichtung bekannt, bei der das zu bearbeitende Material im selben Aufnahmebehälter mittels zweier übereinander angeordneter Werkzeugsätze in zwei aufeinanderfolgenden Stufen kontinuierlich bearbeitet wird. In der ersten, mittels des oberen Werkzeugsatzes durchgeführten Stufe wird das Material vorzerkleinert und/oder vorgewärmt und/oder vorgetrocknet und/oder vorgemischt. In der zweiten, mittels des unteren Werkzeugsatzes durchgeführten Stufe erfolgt die gleiche Behandlung des Materials, jedoch weniger intensiv. Der Materialaustausch zwischen der ersten und der zweiten Stufe erfolgt über einen permanent offenen Ringspalt, der zwischen der Behälterwand und einer Trägerscheibe ausgebildet ist. Allerdings ist der Ringspalt durch die dort auftretende Reibung des Materials zwischen Behälterwand und Trägerscheibe nicht vorteilhaft und auch nicht beliebig verkleinerbar. Außerdem kann die Größe des Ringspaltes nicht verändert werden. Bei größeren Behältern dieser Bauart ist deshalb die gesamte offene Fläche zwischen den Stufen größer als nötig, was zu einer Verbreiterung des Verweilzeitspektrums des Materials führt. GB-A-834 892 offenbart eine Vorrichtung gemäß dem Oberbegriff des Anspruchs 1.

Die Erfindung setzt sich somit zur Aufgabe, die Vorrichtungen der eingangs beschriebenen Art zu verbessern, und eine energieeffiziente Vorrichtung zu schaffen, die bei geringem Platzbedarf ein Material mit homogener, guter Qualität liefert. Außerdem ist es Aufgabe der Erfindung ein vorteilhaftes Verfahren zu schaffen, mit dem stückiges Kunststoffmaterial platzsparend und effizient behandelt werden kann.

Diese Aufgaben werden durch die kennzeichnenden Merkmale des Anspruchs 1 bzw. 17 gelöst.

Anspruch 1 gewährleistet in vorteilhafter Weise, dass vermieden wird, dass frisch eingebrachtes, unzureichend behandeltes bzw. vorbereitetes Material in die Austragschnecke gelangt, ohne genügend bearbeitet zu sein, wodurch die Vorrichtung und ihr Betrieb wesentlich vereinfacht werden. Dies wird durch im Behälter eingesetzte und diesen in Kammern unterteilende, Zwischenböden gewährleistet, wobei Mittel vorgesehen sind, die einen Austausch des erweichten stückigen, nicht geschmolzenen Materials zwischen den jeweils direkt benachbarten Stufen bzw. Ebenen bzw. Kammern bewirken bzw. gestatten. Die Zone, wo vorwiegend die Zerkleinerung bzw. Trocknung bzw. Vorwärmung des Materiales erfolgt, ist somit getrennt von der Zone, wo das Material in das Schneckengehäuse eingedrückt wird. Hierbei stellt sich nach einer kurzen Betriebszeit ein Gleichgewicht zwischen den Zonen ein. Dies trägt dazu bei, eine ausreichende Verweilzeit des Materiales im Aufnahmebehälter, insbesondere in dessen Bereich oberhalb des Zwischenbodens, sicherzustellen. Damit wird die Temperatur des in die Austragöffnung des Aufnahmebehälters eingebrachten Materiales vergleichmäßigt, da im wesentlichen alle im Behälter befindlichen Kunststoffteile ausreichend vorbearbeitet werden. Die annähernd konstante Temperatur des in das Schneckengehäuse eintretenden Materiales hat zur Folge, dass die inhomogenen Kunststoffnester in der Extruderschnecke weitgehend eliminiert werden und dadurch die Schneckenlänge geringer gehalten werden kann, als bei den bekannten Konstruktionen, da die Schnecke weniger Arbeit aufbringen muss, um das Kunststoffmaterial mit Sicherheit auf gleiche Plastifiziertemperatur zu bringen. Die konstante Eintrittstemperatur des Kunststoffmateriales in das Schneckengehäuse hat weiters eine gleichmäßige Vorverdichtung des Materiales im Schneckengehäuse zur Folge, was sich auf die Verhältnisse an der Extruderöffnung günstig auswirkt, insbesondere in Form eines gleichmäßigen Extruderdurchsatzes und einer gleichmäßigen Materialqualität am Extruderausgang. Die verkürzte Schneckenlänge ergibt eine Energieeinsparung und eine im Vergleich zu den bekannten Konstruktionen erniedrigte Verarbeitungstemperatur im Extruder, da ja die durchschnittliche Eintrittstemperatur am Eintrittsende der Schnecke gleichmäßiger ist als bei den bekannten Konstruktionen. Beim Erfindungsgegenstand muss somit das bearbeitete Kunststoffmaterial -gesehen über den gesamten Bearbeitungsvorgang - bei einer im Vergleich zu anderen Konstruktionen weniger hohen Temperatur bearbeitet werden, um die Sicherheit einer ausreichenden Plastifizierung zu haben. Dieser Abbau der Spitzentemperaturen hat die eingangs erwähnte Energieeinsparung zur Folge und weiters die Vermeidung einer thermischen Schädigung des verarbeitenden Materiales.

Außerdem kann durch eine derartige Vorrichtung die Bearbeitung des Materials in Abhängigkeit von der Art des Kunststoffes gesteuert und angepasst werden. So ist es beispielsweise bei PET vorteilhaft, eine Erhöhung der Viskosität (iV) zu erreichen. Bei anderen Kunststoffen, beispielsweise bei HDPE oder Polycarbonat, ist es auch vorteilhaft, das Kunststoffmaterial zu entgiften bzw. von flüchtigen Bestandteilen zu befreien und diese aus dem Materialstrom zu entfernen. Auch dies kann in vorteilhafter Weise durch die erfindungsgemäße Vorrichtung gewährleistet werden. Durch die Tatsache, dass die einzelnen Stufen bzw. Ebenen im Wesentlichen voneinander abgeschottet sind, wird eine Verschleppung von flüchtigen Bestandteilen von einer Ebene zu einer anderen, reineren Ebene minimiert. Werden die flüchtigen Bestandteile in jeder Ebene abgezogen bzw. abgesaugt, kann auf diese Weise rasch und einfach eine erhöhte Materialreinheit erzielt werden.

Außerdem verringert sich durch die eingesetzten Zwischenböden die Höhe der Materialsäule über den bewegten Werkzeugen bzw. Mischorganen. Einerseits wird dadurch die mechanische Belastung auf die Werkzeuge verringert und die Wartungsintervalle der Mischwerkzeuge sowie deren Lebenszeit werden vergrößert. Außerdem führt dies zu einer besseren Kontrolle bei der Energieeinbringung in das Material, wodurch man leichter an die höchstzulässige Temperatur für das zu behandelnde Material herangehen kann. Die höchstzulässige Temperatur ist dabei die Temperatur, bei der das Material in einem erweichten, teigigen Zustand vorliegt, jedoch noch nicht aufgeschmolzen ist. Die Einstellung dieser Temperatur ist sehr sensibel, da eine zu hohe Temperatur zu einem Aufschmelzen und Zusammenbacken führen würde. Die Temperatureinbringung erfolgt durch die Misch- und Rührwerkzeuge und wird insbesondere auch dadurch gesteuert. Außerdem erfolgt durch die Misch- und Rührwerkzeuge eine das Zusammenkleben verhindernde Durchmischung. Es ist somit vorteilhaft, die Temperatur möglichst schnell und genau regulieren zu können, was durch die Unterteilung des Gesamtbehälters in einzelne kleinere, leicht zu überwachende Mischräume in vorteilhafter Weise gewährleistet werden kann. Durch die Einstellung einer maximal zulässigen Temperatur und die Sicherheit, diese Temperatur auch halten und schnell anpassen zu können, kommt es auch zu einer Verbesserung der Diffusionsgeschwindigkeiten der zu entfernenden flüchtigen Bestandteile und zu einer weiteren Verbesserung der Reinheit.

Zusammengefasst heißt das, dass es durch die eingesetzten Zwischenböden zu einer Verringerung des Materialaustausches in Fließrichtung von einer Ebene zur nächsten erfolgt, wodurch der Durchlauf des stückigen Material verlangsamt wird und das Verweilspektrum verengt wird.

Die abhängigen Ansprüche beziehen sich auf vorteilhafte Ausgestaltungen der Erfindung.

So ist es vorteilhaft, wenn die Kammern übereinander angeordnet sind und der Materialstrom schwerkraftbedingt von oben nach unten durchgeführt wird. Auf diese Weise kann mit konstruktiv einfachen Austauschmitteln oder sogar mit bloßen Öffnungen ohne zusätzliche Förderorgane das Auslangen gefunden werden.

Weiters kann es vorteilhaft sein, wenn die Kammern untereinander unterschiedliche Durchmesser und/oder unterschiedliche Höhen aufweisen. Gemäß einer bevorzugten Ausführungsform hat dabei die, in Fließrichtung des stückigen Materials gesehen, oberste Kammer, in die das Material eingebracht wird, den größten Durchmesser, und gegebenenfalls auch die geringste Höhe, im Vergleich zu den in Fließrichtung gesehen weiter unten liegenden Kammern. Auf diese Weise kann die Bearbeitung des nicht vollständig geschmolzenen Materials effektiv beeinflusst werden. Außerdem ist die Aufnahmekapazität im obersten Behälter vergrößert. Die Ausbildung einer obersten Kammer mit großem Durchmesser bietet auch den Vorteil, dass auf diese Weise eine effektive und den jeweiligen Umständen angepasste Bearbeitung des Kunststoffmaterials, insbesondere ein Zerkleinern und Vorhomogenisieren, bewerkstelligt werden kann.

Eine weitere vorteilhafte Ausgestaltung betrifft die Ausbildung der Misch- und Zerkleinerungswerkzeuge. In dieser Hinsicht ist es vorteilhaft, dass diese so ausgebildet sind, dass dadurch das Material bewegt, in Rotation versetzt, gemischt, erwärmt, zerkleinert und/oder in einen erweichten Zustand gebracht wird, ohne dass das Material schmilzt. Die Misch- und Zerkleinerungswerkzeuge müssen somit das Material in einem stückigen bzw. teilchenförmigen Zustand erhalten und dieses gegebenenfalls auch trocknen und/oder vorkristallisieren.

Die Misch- und Zerkleinerungswerkzeuge können in den jeweiligen Kammern unterschiedlich ausgestaltet sein und/oder unabhängig voneinander über einen oder mehrere Antriebe, insbesondere mit unterschiedlichen Drehzahlen steuerbar bzw. angetrieben sein. Auf diese Weise kann durch Auswahl der richtigen Drehzahl und des richtigen Werkzeuges beispielsweise schnell viel Energie in das frische Material eingebracht werden. Dadurch wird das Material rasch erwärmt und die allenfalls enthaltene Feuchte kann rasch mit Hilfe von Vakuum oder trockenem Inertgas entfernt werden. In der darunter liegenden Kammer muss somit deutlich weniger Energie in das Material eingebracht werden, wodurch in dieser Kammer andere Werkzeugausgestaltungen eingesetzt werden können, die gegebenenfalls mit einer anderen Drehzahl laufen. Auf diese Weise kann größtmögliche Variabilität und eine optimale Vorgangsweise in Abhängigkeit des zu behandelnden Materials gewährleistet werden und das Material bestmöglich im erweichten, stückigen, nicht-geschmolzenen Zustand gehalten werden.

In diesem Zusammenhang ist es einerseits vorteilhaft, die Misch- und Zerkleinerungswerkzeuge auf einer gemeinsamen Rotorstange anzuordnen, da dies in manchen Situationen effizient ist und eine ausreichende Bearbeitung sicherstellt. Andererseits kann es vorteilhaft sein, insbesondere in Anbetracht der oben erwähnten variablen Bearbeitung, die Misch- und Zerkleinerungswerkzeuge über getrennte Antriebe zu bewegen.

Gemäß einer vorteilhaften Ausgestaltung sind die Mittel entweder als über ihre lichte Weite freien Durchtritt gewährende Öffnungen ausgestaltet, was konstruktiv sehr einfach und wartungsarm zu realisieren ist. Auch können die Mittel als Labyrinthe ausgestaltet sein, die die Verweilzeit des Materials zusätzlich erhöhen. Um eine Steuerung der Verweilzeit zu ermöglichen ist es vorteilhaft, die Mittel mit Blenden oder Schiebern zu versehen. Auf diese Weise kann gesteuert werden, wann und in welchem Ausmaß Material von einer Kammer in die nächste übergeht. Auch ist es möglich, die Mittel als tatsächliche Förder- und Dosiermittel, beispielsweise Förderschnecken, auszugestalten, die selbstverständlich ebenfalls zu einer Dosierung geeignet sind. Auf diese Weise kann auch schnell und einfach auf unterschiedliches Rohmaterial reagiert werden. Wenn beispielsweise in die oberste Kammer plötzlich dicke Flakes eingebracht werden, nachdem zuvor hauptsächlich dünne Folien bearbeitet wurden, so kann es sinnvoll sein, durch Verringerung der Ausbringeröffnung im Zwischenboden die Verweilzeit des nunmehr gröberen Materials in der obersten Kammer zu verlängern, um eine ausreichende Behandlung zu gewährleisten. Die derartigen Einrichtungen erlauben somit eine variablere Verfahrensführung.

Die Austauschmittel sind derart ausgestaltet sind, dass sie nicht den Zwischenboden durchsetzen, sondern von der stromaufwärts liegenden Kammer ohne Durchbrechung des Zwischenbodens, sondern unter Durchbrechung der Seitenwand dieser Kammer einen Materialstrom zu einer darunter liegenden Kammer gewährleisten. Das behandelte Material strömt somit von der obersten Kammer durch die Seitenwand hindurch und wird in eine stromabwärtsliegende Kammer seitlich eingebracht. Die Austauschmittel können in gleicher Weise wie zuvor beschrieben ausgestaltet sein.

Weiters kann in vorteilhafter Weise vorgesehen werden, dass in vorzugsweise jeder Kammer eine Absaugvorrichtung zur Entfernung von flüchtigen Bestandteilen und/oder eine Vorrichtung zur Spülung mit Inertgas oder reaktiven Gasen vorgesehen ist. Auch kann es vorteilhaft sein, die gesamte Vorrichtung zentral evakuierbar zu machen. So ist es beispielsweise bei der Behandlung vorteilhaft, den Druck in der obersten Kammer bei der höchsten Temperatur so niedrig wie möglich einzustellen, um dadurch eine optimale Viskositätserhöhung durch Polykondensation zu ermöglichen. Die oberste Kammer wird dabei in der Regel mit dem feuchtesten Material beschickt, wodurch es zu einem größeren Druckabfall durch die hohen Feuchtigkeitsmengen, die bei der Temperaturerhöhung entstehen, kommt. Bei der Verwendung einer einzigen Vakuumpumpe für den gesamten Behälter würde der Druck im untersten Zwischenboden ebenfalls abfallen, wodurch dort keine oder nur eine reduzierte Polykondensation stattfinden würde. Unter diesen Aspekten ist es vorteilhaft, dass jeder Bereich bzw. jede Kammer durch eine eigene Vakuumpumpe evakuierbar ist. Grundsätzlich kann anstelle der Vakuumabsaugung auch eine Inertgasspülung mit Stickstoff oder Kohlendioxid erfolgen, wodurch nicht nur Feuchtigkeit, sondern auch andere flüchtige Bestandteile, wie beispielsweise Geruchsstoff, abgesaugt werden.

Außerdem ist es vorteilhaft, vorzugsweise in jeder Kammer, eine Füllstandsmesseinrichtung vorzugehen, wodurch gewährleistet ist, den Materialdurchstrom besser kontrollieren und steuern zu können. In Abhängigkeit vom Füllstand in der jeweiligen Kammer kann die Drehzahl bzw. die Einstellung der Blenden der Austauschmittel gesteuert werden.

Das erfindungsgemäße Verfahren gewährleistet im Wesentlichen die oben angeführten Vorteile, insbesondere dass damit ermöglicht wird, Kunststoffmaterial effektiv zu bearbeiten bzw. aufzubereiten.

Weitere Vorteile und Ausgestaltungen der Erfindung ergeben sich aus der Beschreibung und den beiliegenden Zeichnungen.

Die Erfindung ist anhand von Ausführungsbeispielen in den Zeichnungen schematisch dargestellt und wird im Folgenden unter Bezugnahme auf die Zeichnungen beispielsweise beschrieben.
Fig. 1 zeigt eine erste Ausführungsform einer erfindungsgemäßen Vorrichtung mit drei übereinander angeordneten Kammern gleichen Durchmessers.
Fig. 2 zeigt eine weitere Ausführungsform mit zwei übereinander angeordneten Kammern unterschiedlichen Durchmessers.
Fig. 3 zeigt eine alternative Ausführungsform von Fig. 1.

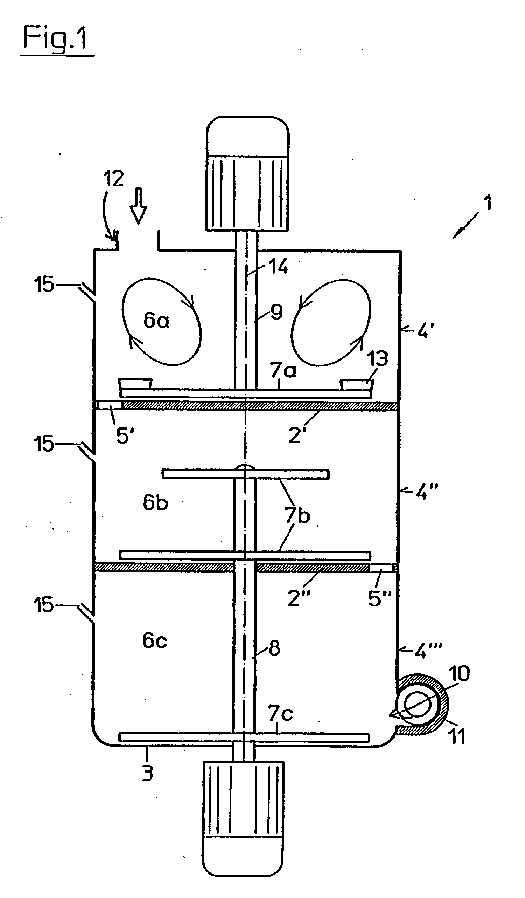

In Fig. 1 ist eine Vorrichtung zur Behandlung von thermoplastischem Kunststoffmaterial, insbesondere von Recyclingware bzw. Verpackungsabfällen od. dgl., dargestellt, die einen Aufnahmebehälter bzw. Schneidverdichter 1 umfasst. Das Material ist von oben über eine Einbringöffnung 12 in den Aufnahmebehälter 1 einbringbar und gelangt in die oberste Kammer 6a. Diese Kammer 6a ist zylindrisch ausgestaltet und mit einem Misch- bzw. Zerkleinerungswerkzeug 7a ausgerüstet. Das Misch- und Zerkleinerungswerkzeug 7a ist über eine Rotorstange 9 mit einer Antriebseinheit verbunden und kann in rotierende Bewegungen versetzt werden. Das Misch- und Zerkleinerungswerkzeug 7a ist im Bodenbereich der obersten Kammer 6a angeordnet und ist derart gesteuert bzw. ausgestaltet, dass es auf das Kunststoffgut eine mischende, erwärmende bzw. gegebenenfalls zerkleinernde Wirkung ausübt. Das Material wird in Rotation versetzt und es wird eine Mischtrombe ausgebildet. Dabei können zwei normal zur Längsachse 14 der Gesamtvorrichtung bzw. zur Rotorstange 9 ausgerichtete Arme ausgebildet sein, die mit auf das Kunststoffgut einwirkenden Arbeitskanten 13 versehen sind. Diese Arbeitskanten 13 verlaufen so, dass sie einerseits auf das im Randbereich des Aufnahmebehälters 1 befindliche Kunststoffmaterial einen ziehenden Schnitt ausüben und andererseits das zerkleinernde Material möglichst in eine Ausbringeröffnung 5' fördern.

In die oberste Kammer 6a können auch weitere, flüssige oder feste, Zusatzstoffe oder Füllstoffe zugegeben werden. Diese Zugabe kann entweder über die Einbringöffnung 12 oder auch in einem Bereich unterhalb des Materiallevels in der Kammer 6a erfolgen.

Direkt unterhalb der obersten Kammer 6a ist eine weitere mittlere Kammer 6b angeordnet. Die mittlere Kammer 6b weist den gleichen Durchmesser auf wie die oberste Kammer 6a. Die beiden Kammern 6a und 6b sind durch einen Zwischenboden 2' voneinander räumlich getrennt, wobei der Zwischenboden in gleichem Maße den unteren Boden der obersten Kammer 6a bildet wie auch die obere Abdeckung der mittleren Kammer 6b. Zwischen den Kammern 6a und 6b ist ein Mittel 5' vorgesehen, das eine Überfuhr bzw. einen Transport des erweichten, stückigen, nicht geschmolzenen Materials von der oberen Kammer 6a in die darunter liegende Kammer 6b ermöglicht. Das in der obersten Kammer 6a vorbehandelte Material kann somit schwerkraftbedingt bzw. schwerkraftunterstützt von der obersten Kammer 6a in die weitere Kammer 6b einfallen.

In der obersten Kammer 6a ist weiters eine Absaugvorrichtung 15 vorgesehen, durch die flüchtige Bestandteile, wie beispielsweise Wasserdampf oder geruchsstörende Verbindungen, die aus dem Material ausdampfen, abgezogen werden können. Auch ist es möglich, durch die bzw. mittels der Absaugvorrichtung 15 einen Inertgasstrom durch die Kammer 6a zu leiten.

In der weiter unten liegenden Kammer bzw. stromabwärts liegenden mittleren Kammer 6b sind ebenfalls Mischwerkzeuge 7b angeordnet. Im vorliegenden Fall sind es zwei übereinander liegende Mischorgane, die auf einer gemeinsamen Rotorstange 8 gelagert sind und das Material in der Kammer 6b in Bewegung versetzen und in gleicher Weise wie in der Kammer 6a bearbeiten. Die Rotorstange 8 ist allerdings nicht mit der gleichen Antriebseinheit wie die Rotorstange 9 der obersten Kammer 6a verbunden, sondern mit einer Antriebseinheit, die am gegenüberliegenden Ende der Vorrichtung angeordnet ist. Auf diese Weise kann die Drehzahl der Mischwerkzeuge 7b unabhängig von der Drehzahl der Mischwerkzeuge 7a eingestellt werden.

Unterhalb bzw. stromabwärts der Kammer 6b ist eine weitere Kammer 6c angeordnet. Diese unterste Kammer 6c hat dieselbe Größe und denselben Durchmesser wie die beiden oberen Kammern 6a und 6b. Auch in der untersten Kammer 6c ist ein Mischwerkzeug 7c vorgesehen, das wie zuvor beschrieben arbeitet. Die Kammer 6b ist von der untersten Kammer 6c räumlich durch den Zwischenboden 2" getrennt. Um einen Materialstrom zu gewährleisten ist im Zwischenboden 2" ein Mittel 5" ausgebildet, das einen Austausch des von der mittleren Kammer 6b abgehenden erweichten, stückigen Materials in die unterste Kammer 6c gewährleistet.

Die drei Kammern 6a, 6b, 6c sind somit gleich groß, liegen direkt übereinander und bilden den zylindrischen Aufnahmebehälter 1. Die Seitenwände 4', 4" und 4'" der übereinander liegenden Kammern bilden die Seitenwand 4 des Aufnahmebehälters 1. Über die beiden Zwischenböden 2',2" ist der Aufnahmebehälter 1 in die drei Kammern 6a, 6b, 6c unterteilt, nichtsdestoweniger liegt ein einziger, einheitlicher, platzsparender Aufnahmebehälter 1 vor und nicht etwa mehrere miteinander verbundene Einzelbehälter.

Durch die Ausbildung der Zwischenböden 2',2" kann somit kein ungehinderter, undefinierter Materistrom des Rohmaterials zum Extruder erfolgen. Die beiden Mittel 5', 5" liegen nicht fluchtend übereinander, sondern sind radial an entgegengesetzten Enden der Zwischenböden 2',2" ausgebildet. Auf diese Weise kann das Verweilzeitspektrum erhöht und der Weg des Materials verlängert werden. Die beiden Mittel 5', 5" liegen jeweils im Endbereich der von den Misch- und Rührwerkzeugen 7a, 7b erfassten Radien bzw. Bereiche.

Auch in den Kammern 6b und 6c sind Absaugvorrichtungen 15 vorgesehen, um in der obersten Kammer 6a noch nicht freigesetzte flüchtige Bestandteile zu entfernen. Auf diese Weise kann das Material effektiv gereinigt werden.

In der untersten Kammer 6c ist eine in der Seitenwand 4'" ausgebildete Ausbringöffnung 10 angeordnet. Durch die Mischwerkzeuge 7c wird das Kunststoffmaterial spachtelartig in diese Ausbringeröffnung 10 eingebracht, welche im Wesentlichen auf derselben Höhe liegt wie das Mischwerkzeug 7c. An diese Ausbringeröffnung 10 ist in weiterer Folge ein Extruder 11 angeschlossen, in dem das Material kompaktiert und aufgeschmolzen wird.

Die Weiterbewegung des zu bearbeitenden Kunststoffmaterials erfolgt somit auf folgende Weise: Das Material wird über die Einbringeröffnung 12 in die oberste Kammer 6a eingebracht und dort von den Mischwerkzeugen 7a bearbeitet. Dabei kommt es insbesondere zu einer Zerkleinerung des Materials sowie zu einer Erwärmung durch die über die Mischwerkzeuge 7a eingebrachte Energie. Ebenfalls kann in der obersten Kammer 12a eine Trocknung des Materials erfolgen, was insbesondere bei PET von hoher Relevanz ist. Auch kann das Material vorkristallisiert werden. Wesentlich dabei ist, dass das Material in der obersten Kammer 6a zu keinem Zeitpunkt aufgeschmolzen wird, sondern lediglich in einem erweichten Zustand, insbesondere nahe der Vicat-Erweichungstemperatur des zu behandelnden Polymers vorliegt. Die notwendige Temperatur kann in vorteilhafter Weise durch die Mischwerkzeuge 7a, insbesondere deren Rotationsgeschwindigkeit und/oder deren Ausgestaltung der Schneidkanten 13, eingestellt und reguliert werden. Durch die relativ kleinen Kammern ist auch eine rasch erfolgende Regulierung bzw. eine schnelle Temperaturänderung erzielbar. Außerdem verhindern die Mischwerkzeuge 7a ein Zusammenkleben der Kunststoffteilchen und erhalten dadurch die Fließ- und Schüttfähigkeit des Materials.

Anschließend wird das Material durch das Mittel 5' durch den Zwischenboden 2' hindurch von der Kammer 6a in die Kammer 6b übergeführt. Das Mittel 5' ist dabei bei der vorliegenden Ausführungsform in Form einer verschließbaren Öffnung bzw. Blende ausgestaltet. Auf diese Weise kann eine Regulierung des Materialstroms erzielt werden und die Verweilzeit des Materials in der obersten Kammer 6a eingestellt werden. Alternativ kann auch eine Förder- oder Dosierschnecke vorgesehen sein. In der Kammer 6b wird das Material nun ebenfalls einer Bearbeitung durch die Mischwerkzeuge 7b unterzogen, wobei es auch hier nicht zu einer Aufschmelzung des Materials kommt.

Das Material wird dann durch das Mittel 5" durch den Zwischenboden 2" hindurch weiter stromabwärts in die unterste Kammer 6c übergeführt und dort weiter durch die Mischwerkzeuge 7c bearbeitet.

Anschließend wird das Material durch die Austragsöffnung 10 aus dem Behälter 1 abgezogen und hat eine dreistufige Bearbeitung und Vorhomogenisierung hinter sich gebracht, die das Material in vorteilhafter Weise optimal auf den bevorstehenden Schmelzvorgang im Extruder vorbereitet hat.

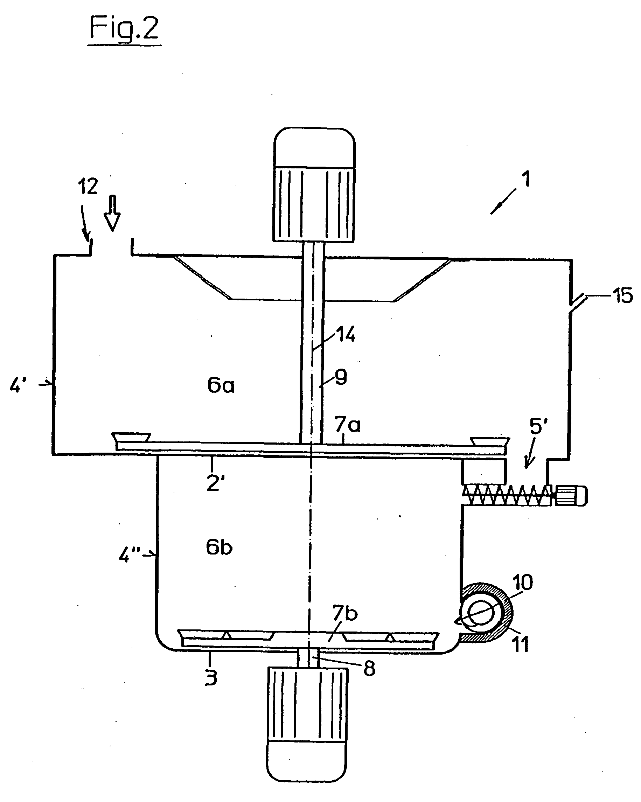

In Fig. 2 ist eine weitere Vorrichtung vorgesehen. Die Vorrichtung umfasst einen Aufnahmebehälter bzw. Schneidverdichter 1, in den Material von oben über die Einbringöffnung 12 einbringbar ist und der ebenfalls eine Austragsöffnung 10 aufweist, durch die das Material nach erfolgter Bearbeitung in Richtung eines Extruders 11 ausbringbar ist. Im Unterschied zu der Vorrichtung gemäß Fig. 1 umfasst die Vorrichtung gemäß Fig. 2 lediglich zwei übereinander angeordnete Kammern 6a und 6b. In beiden Kammern 6a und 6b sind Misch- und Zerkleinerungswerkzeuge 7a, 7b angeordnet. Allerdings ist der Durchmesser der oberen Kammer 6a größer als der Durchmesser der weiter unten liegenden stromabwärts liegenden Kammer 6b. Die Seitenwand 4' der oberen Kammer 6a sowie die Seitenwand 4" der unteren Kammer 6b bilden somit keinen zylindrischen Aufnahmebehälter 1, sondern einen entsprechend unterschiedlich geformten Aufnahmebehälter 1. Nichtsdestotrotz ist weiterhin ein einziger einheitlicher Aufnahmebehälter 1 gegeben und liegen nicht etwa zwei voneinander räumlich getrennte Behälter vor. Dies wird durch den Umstand der unterschiedlichen Durchmesser der Kammern 6a, 6b nicht beeinträchtigt.

Die obere Kammer 6a ist von der unteren Kammer 6b durch einen Zwischenboden 2' getrennt, wobei nun im äußeren Radius dieses Zwischenbodens 2' ein kreisringförmiger Bereich vorgesehen ist, der über die Kreisfläche des Durchmessers der unteren Kammer 6b hinausgeht. Im Zwischenboden 2' ist in diesem kreisringförmigen Außenbereich ein Mittel 5' bzw. eine Loch vorgesehen, das den Zwischenboden 2' vollständig durchsetzt, wodurch jedoch nicht eine direkte vertikale Verbindung zwischen der Kammer 6a und der Kammer 6b, wie in Fig. 1, ausgebildet wird, bei der das Material von oben in die untere Kammer 6b einfällt. Anders als in der Vorrichtung gemäß Fig. 1 ist das Mittel 5' gemäß Fig. 2 derart ausgestaltet, dass das Material zuerst in das Mittel 5' von oben vertikal einfällt bzw. eingebracht wird und dann über eine im wesentlichen horizontale Übergabestrecke in Form eines Rohres oder einer Förderschnecke durch die Seitenwand 4" der unteren Kammer 6b hindurch in diese Kammer 6b eingebracht wird. Auf diese Weise kann variiert werden, ob das Material oberhalb oder unterhalb des Materiallevels in der Kammer 6b eingebracht wird, je nach dem in welcher Höhe das Mittel 5' in die Kammer 6b einmündet. Auch kann der Durchsatz gesteuert werden.

Das Mittel 5' ist in Fig. 2 knapp außerhalb des Radius des oberen Misch- und Zerkleinerungswerkzeuges 7a angeordnet, wodurch das erweichte, stückige, nicht geschmolzene Material einfach und effizient n das Mittel 5' einbringbar ist bzw. einfällt.

Zusätzlich können selbstverständlich auch weitere Mittel 5' vorgesehen sein, die radial weiter innen liegend ausgebildet sind und, wie in der Vorrichtung gemäß Fig. 1, den Zwischenboden 2' vollständig durchsetzen, wodurch das Material, wie auch gemäß Fig. 1, von der oberen Kammer 6a direkt vertikal in die unterliegende Kammer 6b von oben einbringbar ist.

Der Materialstrom erfolgt analog zu Fig. 1 von der Kammer 6a, in der eine Vorbehandlung des Materials, jedoch kein Aufschmelzen stattfindet, über das Mittel 5' in die Kammer 6b, wobei in der Kammer 6b eine weitere Behandlung des Materials erfolgt. Ein direktes Eintreten von unbehandeltem Rohmaterial in die Extruderschnecke 11 ist somit nicht möglich.

Auch in Fig. 2 sind die beiden Mischwerkzeuge 7a, 7b der unterschiedlichen Kammern 6a, 6b über die unterschiedlichen Antriebseinheiten bzw. Rohrstangen 8, 9 getrennt voneinander steuerbar, wobei die Antriebseinheiten auch hier an gegenüberliegenden Positionen relativ zur Vorrichtung angeordnet sind.

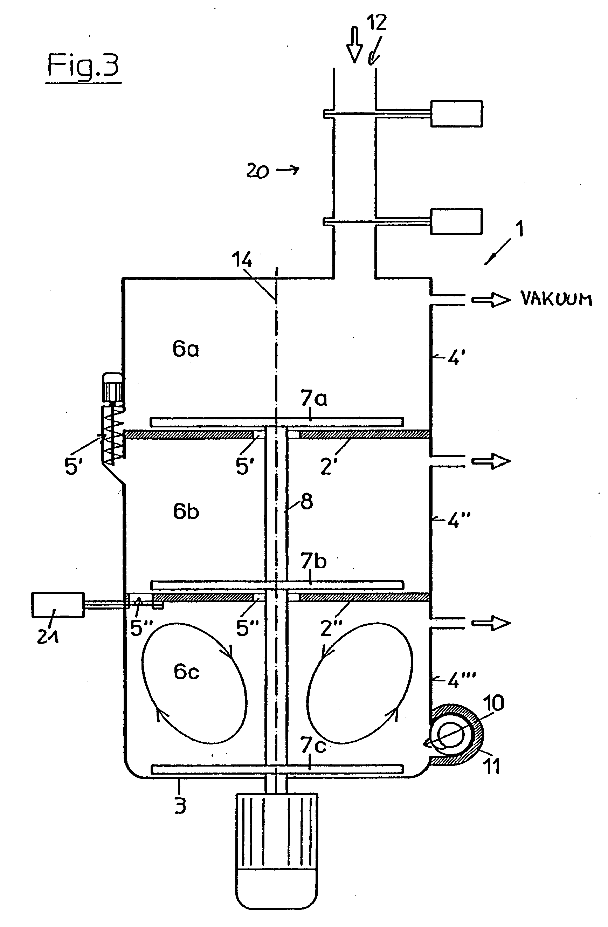

In Fig. 3 ist eine weitere Ausgestaltung der Vorrichtung dargestellt. Wie auch in Fig. 1 ist der Aufnahmebehälter bzw. Schneidverdichter 1 in drei übereinander angeordnete Kammern 6a, 6b, 6c aufgeteilt bzw. unterteilt, wobei die Durchmesser der einzelnen Kammern gleich sind und die Seitenwände 4', 4", 4'" einen einheitlichen zylindrischen Aufnahmebehälter 1 ausbilden. Im Unterschied zu Fig. 1 sind die in jeder Kammer 6a, 6b, 6c vorliegenden Mischeinrichtungen 7a, 7b, 7c auf einer gemeinsamen Rotorstange 8 angeordnet und können somit nur mit einer gemeinsamen bzw. mit derselben Drehzahl rotieren.

Die Kammern 6a, 6b, 6c sind in gewohnter Weise durch Zwischenböden 2', 2" getrennt und über Mittel 5', 5" miteinander materialstromtechnisch verbunden. Allerdings sind die Mittel 5', 5" im Vergleich zu Fig. 1 unterschiedlich ausgebildet. Zwischen der obersten Kammer 6a und der mittleren Kammer 6b ist ein Mittel 5' vorgesehen, das zentral umfänglich um die Rotorstange 8 angeordnet ist. Außerdem ist ein zusätzliches Mittel 5' vorgesehen, das im Unterschied zu den bisherigen Mitteln nicht den Zwischenboden durchsetzt, sondern nur die Seitenwände 4', 4" von zwei übereinanderliegenden Kammern 6a, 6b durchbricht. Das Material kann somit durch die Seitenwand 4' der obersten Kammer 6a hindurch aus dieser Kammer 6a abgeführt werden und wird über das Mittel 5', im vorliegenden Falle eine Förder- bzw. Dosierschnecke, unter Durchbrechung der Seitenwand 4" der darunter liegenden Kammer 6b in diese eingebracht. Dieses Mittel 5' liegt somit außerhalb der Kammern 6a,6b bzw. außerhalb der Seitenwände 4', 4". In diesem Fall ist auf die Temperatur in diesem Mittel 5' zu achten bzw. können Isolier- und/oder Heizeinrichtungen für dieses Mittel 5' sinnvoll sein.

Der Zwischenboden 2" zwischen der mittleren Kammer 6b und der untersten Kammer 6c weist ebenfalls ein Mittel 5" auf, das zentral um die Rotorachse 8 angeordnet ist. Außerdem ist ein weiteres Mittel 5" angeordnet, das als eine über einen Schieber 21 verstellbare Öffnung ausgestaltet ist und den Zwischenboden 2" durchbricht. Dieses Mittel 5" liegt im äußeren radialen Bereich der Mischwerkzeuge 7b.

Ansonsten ist die Vorrichtung gleich wie in Fig. 1 ausgestaltet.

Die Materialzufuhr über die Einbringeinrichtung 12 erfolgt in vorteilhafter Weise über eine Regelungs- bzw. Steuervorrichtung 20, wie z.B. eine Zellradschleuse, ein Schiebersystem oder ein Schneckenfördersystem.

Weiters kann vorgesehen sein, dass vorzugsweise in jeder Kammer 6a, 6b, 6c eine Füllstandsmesseinrichtung 16 vorgesehen ist, um die jeweilige Höhe des Materials in der jeweiligen Kammer zu bestimmen und die Verfahrensführung durch Anpassung der Drehzahl der Mischwerkzeuge 7 bzw. durch Einstellung der Öffnungsweiten bzw. Durchlassöffnungen der Mittel 5 jederzeit angepasst werden kann.

Der Mantel des Behälters 1 kann zusätzlich beheizbar oder kühlbar ausgeführt werden, z.B. durch Heiz- oder Kühlschlangen oder durch einen Doppelmantel. So ist jeder Teilbereich bzw. jede Seitenwand 4', 4", 4'" jeder Kammer 6a, 6b, 6c getrennt voneinander heizbar bzw. kühlbar. Auch können die Mischwerkzeuge 7a, 7b, 7c jeweils beheizbar oder kühlbar ausgeführt sein.

Weiters wäre es möglich, auch an jeder Kammer 6a, 6b, 6c eine eigene Austragsöffnung 10 vorzusehen, über die Material in einen Extruder 11 eingeleitet werden kann.

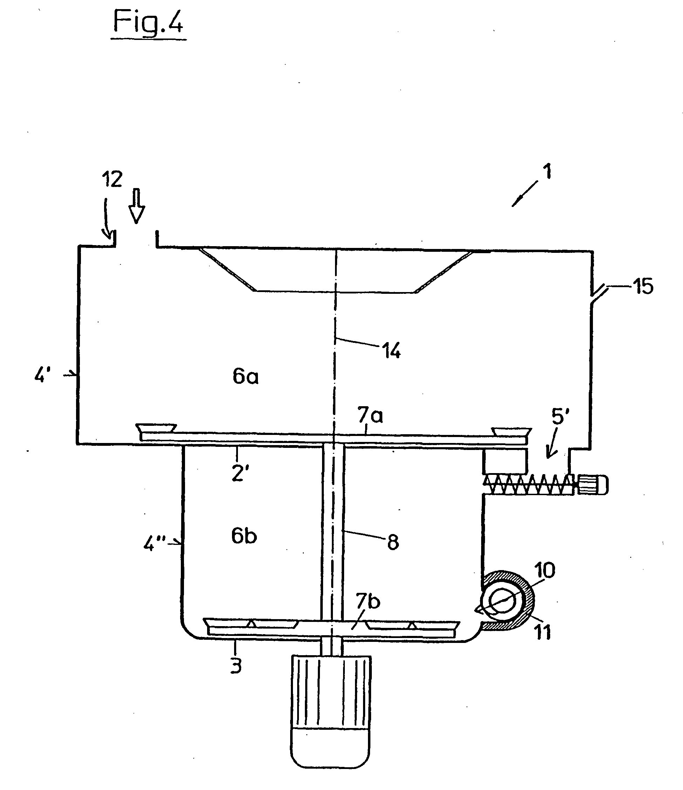

Fig. 4 zeigt eine beispielhafte Vorrichtung, die im Wesentlichen der Vorrichtung gemäß Fig. 2 entspricht. Allerdings sind die Misch- und Zerkleinerungswerkzeuge 7a, 7b auf einer gemeinsamen Rotorstange 8 angeordnet bzw. über einen einzigen Antriebsmotor bewegt und sind somit bewegungsgleich gekoppelt bzw. synchronisiert.

## Patentansprüche

1. Vorrichtung zur Behandlung von, insbesondere thermoplastischem, Kunststoffmaterial, z.B. Polyester oder Polyethylen, mit einem Aufnahmebehälter bzw. Schneidverdichter (1), in den das zu bearbeitende Material einbringbar ist, in dessen unterem Bereich eine Austragsöffnung (10) vorgesehen ist, durch die das bearbeitete Material aus dem Aufnahmebehälter (1) in einen *an den Aufnahmebehälter bzw. Schneidverdichter (1) angeschlossenen* Extruder (11) *zur Verdichtung des Kunststoffmaterials,* ausbringbar ist, *wobei* der Aufnahmebehälter (1) in zumindest zwei, voneinander durch jeweils einen Zwischenboden (2',2",...) getrennte, insbesondere zylindrische, Kammern (6a,6b,6c,...) unterteilt ist, wobei in jeder Kammer (6a,6b,6c,...) zumindest ein, insbesondere um eine vertikale Achse (8, 14) drehbares, auf das Material einwirkendes Misch- bzw. Zerkleinerungswerkzeug (7a,7b,7c,...) angeordnet ist, mit dem das Material in einen erweichten, jedoch permanent stückigen bzw. teilchenförmigen und nicht geschmolzenen Zustand bringbar ist, und wobei Mittel (5',5",...) vorgesehen sind, die einen Austausch bzw. ein Überführen des erweichten, stückigen, nicht geschmolzenen Materials zwischen den jeweils direkt benachbarten Kammern (6a,6b,6c,...) bewirken bzw. gestatten,
**dadurch gekennzeichnet, dass** die den Austausch bzw. die Überführung des Materials zwischen den benachbarten Kammern (6a,6b,6c,...) gestattenden Mittel (5',5",...) von der obersten Kammer (6a) bzw. von jeder relativ weiter oben liegenden Kammer ausgehen und unter vollständiger Durchsetzung der jeweiligen Seitenwand (4', 4", ...) jeder Kammer (6a,6b,6c,...), sowie unter Umgehung bzw. ohne Durchsetzung der Zwischenböden (2',2",...), eine Materialstromverbindung in die direkt benachbarte, in Materialstromrichtung weiter unten liegende Kammer (6b,6c,...) ausbilden.

2. Vorrichtung nach Anspruch 1, **dadurch gekennzeichnet, dass** die Kammern (6a,6b,6c,...) übereinander angeordnet sind und der Materialstrom von der obersten Kammer (6a), in die das zu behandelnde Material einbringbar ist, insbesondere schwerkraftbedingt, nach unten in die folgenden Kammern (6b, 6c,...) gerichtet ist.

3. Vorrichtung nach Anspruch 1 oder 2, **dadurch gekennzeichnet, dass** die Kammern (6a,6b,6c,...) untereinander unterschiedliche Durchmesser und/oder unterschiedliche Höhen aufweisen, wobei vorzugsweise die oberste Kammer (6a) bzw. die relativ weiter oben liegende Kammer einen größeren Durchmesser, bei vorzugsweise geringerer Höhe, aufweist als die jeweils in Materialstromrichtung darunterliegenden Kammern (6b,6c,...).

4. Vorrichtung nach einem der vorangehenden Ansprüche, **dadurch gekennzeichnet, dass** die Misch- bzw. Zerkleinerungswerkzeuge (7a,7b,7c,...) derart steuerbar bzw. ausgestaltet sind bzw. auf das Material einwirken, dass das zu behandelnde Material bewegt, in Rotation versetzt bzw. eine Mischthrombe ausgebildet, gemischt, erwärmt bzw. gegebenenfalls zerkleinert wird und dabei in einen erweichten Zustand gebracht wird, jedoch permanent stückig bzw. teilchenförmig bleibt und nicht schmilzt und/oder dass, zumindest in der obersten Kammer (6a), das Material dabei getrocknet und/oder kristallisiert wird.

5. Vorrichtung nach einem der vorangehenden Ansprüche, **dadurch gekennzeichnet, dass** die Misch- bzw. Zerkleinerungswerkzeuge (7a,7b,7c,...) in den jeweiligen Kammern (6a,6b,6c,...) unterschiedlich ausgestaltet sind und/oder gegebenenfalls auf unterschiedlichen Rotorstangen (8,9) angeordnet sind und/oder unabhängig voneinander, über einen oder mehrere Antriebe, steuerbar sind, und insbesondere mit unterschiedlichen Drehzahlen rotieren.

6. Vorrichtung nach einem der vorangehenden Ansprüche, **dadurch gekennzeichnet, dass** alle Misch- bzw. Zerkleinerungswerkzeuge (7a,7b,7c,...) auf einer gemeinsamen durchgehenden Rotorstange (8) angeordnet sind oder dass die Misch- bzw. Zerkleinerungswerkzeuge (7a,7b,7c,...) auf zwei oder mehr voneinander unabhängige und jeweils separat angetriebene Rotorstangen (8,9) verteilt sind, die gegebenenfalls von gegenüberliegenden Seiten in den Aufnahmebehälter (1) einragen.

7. Vorrichtung nach einem der vorangehenden Ansprüche, **dadurch gekennzeichnet, dass** die Mittel (5',5",...) als über ihre lichte Weite freien Durchtritt gewährende, gegebenenfalls als Labyrinth ausgestaltete, gegebenenfalls als zumindest teilweise verschließbare bzw. den Materialdurchstrom regulierbare, Öffnungen bzw. Blenden oder als Förder- bzw. Dosiermittel, insbesondere als Förderschnecken od. dgl., ausgestaltet ist.

8. Vorrichtung nach einem der *vorangehenden* Ansprüche, **dadurch gekennzeichnet, dass** die Mittel (5',5",...) als Übergabestrecken ausgebildet sind, wobei die Übergabestrecken als über ihre lichten Weiten freien Durchtritt gewährende, gegebenenfalls zumindest teilweise verschließbare, Rohre, oder als Förder- bzw. Dosiermittel, insbesondere als Förderschnecken od. dgl., ausgebildet sind.

9. Vorrichtung nach einem der vorangehenden Ansprüche, **dadurch gekennzeichnet, dass** in zumindest einer, vorzugsweise in jeder, Kammer (6a,6b,6c,...) eine Absaugvorrichtung (15) zur Entfernung von flüchtigen Bestandteilen und/oder eine Vorrichtung zur Spülung mit Inertgas oder reaktiven Gasen od. dgl. vorgesehen sind, wobei die Absaugvorrichtung (15) gegebenenfalls in den Misch- bzw. Zerkleinerungswerkzeugen (7a,7b,7c,...) ausgebildet ist.

10. Vorrichtung nach einem der vorangehenden Ansprüche, **dadurch gekennzeichnet, dass** in zumindest einer, vorzugsweise in jeder, Kammer (6a,6b,6c,...) eine Füllstandsmesseinrichtung (16) vorgesehen ist.

11. Vorrichtung nach einem der *vorangehenden* Ansprüche, **dadurch gekennzeichnet, dass** die Kammern (6a,6b,6c,...) untereinander unterschiedliche Durchmesser und/oder unterschiedliche Höhen aufweisen, wobei die oberste Kammer (6a) bzw. die relativ weiter oben liegende Kammer eine geringere Höhe aufweist als die jeweils in Materialstromrichtung darunterliegenden Kammern (6b,6c,...).

12. Vorrichtung nach einem der vorangehenden Ansprüche, **dadurch gekennzeichnet, dass** *die Mittel (5'.5"....) von der obersten Kammer (6a) bzw. von jeder relativ weiter oben liegenden Kammer im niederen bzw. basisnahen Bereich nahe des Zwischenbodens (2',2",...) ausgehen.*

13. Verfahren zur Behandlung von, insbesondere thermoplastischem, Kunststoffmaterial, z.B. Polyester oder Polyethylen, unter Verwendung der Vorrichtung nach einem der *vorangehenden* Ansprüche, wobei das zu bearbeitende Material nacheinander durch mehrere in Materialstromrichtung aufeinanderfolgende, in einem gemeinsamen Aufnahmebehälter (1) liegende Kammern (6a,6b,6c,...) geführt wird, wobei das Material in jeder Kammer (6a,6b,6c,...) mit, gegebenenfalls voneinander unabhängig steuerbaren, Misch- bzw. Zerkleinerungswerkzeugen (7a,7b,7c,...) bearbeitet, bewegt, gemischt, erwärmt und/oder zerkleinert und gegebenenfalls getrocknet und/oder kristallisiert wird und dabei in einen erweichten, nicht aufgeschmolzenen Zustand, bei dem das Material permanent stückig bzw. teilchenförmig bleibt, gebracht und in diesem Zustand durchwegs gehalten wird, und wobei das Material nach der letzten Kammer einem Verdichtungsschritt unterzogen bzw. in einen Extruder (11) ausgebracht wird.

## Claims

1. Device for processing, in particular, thermoplastic plastic material, for example polyester or polyethylene, with a receptacle or cutter-compactor (1) into which the material to be processed can be introduced, wherein a discharge opening (10) is provided in the lower region through which the processed material can be discharged from the receptacle (1) into an extruder (11) that is connected to the receptacle or cutter-compactor (1) for compaction of the plastic material, wherein the receptacle (1) is divided into at least two, in particular cylindrical, chambers (6a, 6b, 6c,...) that are mutually separated by a respective intermediate base (2', 2", ...), wherein each chamber (6a, 6b, 6c, ...) has at least one mixing or comminution tool (7a, 7b, 7c, ...) acting on the material, wherein the tool is arranged to rotate in particular about a vertical axis (8, 14) and with which the material can be brought into a softened but permanently lumpy or particulate and non-molten state, and wherein means (5', 5", ...) are provided which cause or permit an exchange or a transfer of the softened lumpy non-molten material between respective directly adjacent chambers (6a, 6b, 6c, ...)
**characterized in that** the means (5', 5", ...) permits the exchange or transfer of material between the adjacent chambers (6a, 6b, 6c, ...) from the uppermost chamber (6a) or from each relatively higher-lying chamber by passing completely through the respective side wall (4', 4", ...) of each chamber (6a, 6b, 6c, ...), as well as bypassing, or without passing through, the intermediate bases (2', 2", ...), with a material flow connection to the chamber (6b, 6c ,. ..).

2. Device according to claim 1, **characterised in that** the chambers (6a, 6b, 6c ,. ..) are arranged one above the other, and the flow of material from the uppermost chamber (6a), into which the material to be processed can be introduced, is directed downwards into the underlying chambers (6b, 6c,...) in particular under the effect of gravity.

3. Device according to claim 1 or 2, **characterised in that** the chambers (6a, 6b, 6c, ...) have different diameters and/or different heights from one another, wherein the uppermost chamber (6a) or the chamber lying relatively higher preferably has a larger diameter and preferably a lower height than the chambers (6b, 6c,...) lying below in the direction of the material flow.

4. Device according to one of the preceding claims, **characterised in that** the mixing or comminution tools (7a, 7b, 7c, ...) are configured or controllable or act on the material in order to move, rotate or form a mixing vortex of the material to be processed, mixed, heated, and optionally comminuted and brought into a softened condition, but that remains permanently lumpy or particulate and does not melt and/or that the resultant material is dried and/or crystallised at least in the uppermost chamber (6a).

5. Device according to one of the preceding claims, **characterised in that** the mixing or comminution tools (7a, 7b, 7c, ...) in the respective chambers (6a, 6b, 6c, ...) are designed differently and/or are optionally arranged on different rotor shafts (8, 9), and/or can be controlled independently of one another via one or more drives, and, in particular, rotate at different speeds.

6. Device according to one of the preceding claims, **characterised in that** all the mixing or comminution tools (7a, 7b, 7c, ...) are arranged on a common continuous rotor shaft (8), or that the mixing or comminution tools (7a, 7b, 7c, ...) are distributed over two or more independent and separately driven rotor shafts (8, 9) that optionally protrude from opposite sides in the receptacle (1).

7. Device according to one of the preceding claims, **characterised in that** the means (5', 5", ...) ensure free passage via their opening clearance, or configured as a labyrinth, or, where appropriate, may optionally be in the form of openings or apertures that can at least partially close off or control the material flow, or designed as actual conveying and dosing means, for example screw conveyors or the like.

8. Device according to one of the *preceding* claims, **characterised in that** the means (5', 5", ...) are designed as transfer sections, wherein the transfer sections ensure free passage via their opening clearance and may be, where appropriate, formed as at least partially closable pipes, or as conveying or dosing means, particularly as screw conveyors or the like.

9. Device according to one of the preceding claims, **characterised in that** in at least one, preferably in each, chamber (6a, 6b, 6c, ...), a suction device (15) for removing volatile components and/or a device for purging with inert gas or reactive gases or the like, is provided, wherein the suction device (15), if appropriate, is formed in the mixing or comminution tools (7a, 7b, 7c, ...).

10. Device according to one of the preceding claims, **characterised in that** a level measuring device (16) is provided in at least one, preferably in each, chamber (6a, 6b, 6c, ...).

11. Device according to any one of the preceding claims, **characterised in that** the chambers (6a, 6b, 6c .. ,.) have different diameters and/or different heights from one another, wherein the uppermost chamber (6a) or the relatively higher chamber has a lower height than the chambers (6b, 6c, ...) lying below in the direction of the material flow.

12. Device according to one of the preceding claims, characterised that the means (5', 5", ...) discharge from the lower region or near the intermediate base (2', 2", ...) of the uppermost chamber (6a), or of each underlying chamber.

13. Method for processing, in particular, thermoplastic plastic materials, e.g. polyester or polyethylene, using the device according to any one of the preceding claims, wherein the material to be processed is sequentially guided via a plurality of successive chambers (6a , 6b, 6c, ...) in the material flow direction in a receptacle (1), wherein the material in each chamber (6a, 6b, 6c, ...), where appropriate, is processed, moved, mixed, heated and/or comminuted and, optionally dried and/or crystallised by mixing or comminution tools (7a, 7b, 7c ...) that are controllable independently of one another, thereby resulting in a softened, non-molten state in which the material remains permanently lumpy or particulate, and is consistently held in this state, and wherein the material undergoes a compaction step or is supplied to an extruder (11) after the last chamber.

## Revendications

1. Dispositif pour le traitement, plus particulièrement, d'une matière plastique thermoplastique, par exemple du polyester ou du polyéthylène, avec un récipient de logement ou un compresseur de coupe (1), dans lequel le matériau à traiter peut être introduit, dans la partie inférieure duquel se trouve une ouverture de sortie (10) à travers laquelle le matériau à traiter peut être expulsé hors du récipient de logement (1) vers une extrudeuse (11) reliée au récipient de logement ou au compresseur de coupe (1) pour la compression de la matière plastique, le récipient de logement (1) étant divisé en au moins deux chambres (6a, 6b, 6c, ...), plus particulièrement cylindriques, séparément entre elles par un fond intermédiaire (2', 2", ...), au moins un outil de mélange ou de broyage (7a, 7b, 7c, ...) agissant sur le matériau et rotatif autour d'un axe (8, 14), plus particulièrement vertical, étant disposé dans chaque chambre (6a, 6b, 6c, ...), avec lequel le matériau peut être mis dans un état ramolli, mais en permanence en morceaux ou sous la forme de particules et non fondu et des moyens (5', 5", ...) étant prévus, qui provoquent ou permettent un échange ou un transfert du matériau ramolli, en morceaux, non fondu entre les chambres (6a, 6b, 6c, ...) directement adjacentes.
**caractérisé en ce que** les moyens (5', 5", ...) permettant l'échange ou le transfert du matériau entre les chambres adjacentes (6a, 6b, 6c, ...) partent de la chambre supérieure (6a) ou de toute chambre se trouvant plus haut et forment, avec une traversée complète de la paroi latérale (4', 4", ...) correspondante de chaque chambre (6a, 6b, 6c, ...) ainsi qu'avec le contournement ou sans traversée des fonds intermédiaires (2', 2", ...), une liaison d'écoulement de matériau vers la chambre (6b, 6c, ...) directement adjacente se trouvant plus bas dans la direction d'écoulement du matériau.

2. Dispositif selon la revendication 1, **caractérisé en ce que** les chambres (6a, 6b, 6c, ...) sont disposées les unes sur les autres et le flux de matériau est orienté de la chambre supérieure (6a), dans laquelle le matériau à traiter peut être introduit, plus particulièrement sous l'effet de la gravité, vers le bas dans les chambres suivantes (6b, 6c, ...).

3. Dispositif selon la revendication 1 ou 2, **caractérisé en ce que** les chambres (6a, 6b, 6c, ...) présentent des diamètres différents et/ou des hauteurs différentes, la chambre supérieure (6a) ou la chambre se trouvant plus haut présentant de préférence un diamètre supérieur, pour une hauteur de préférence inférieure, à celui des chambres (6b, 6c, ...) situées en dessous dans la direction du flux de matériau.

4. Dispositif selon l'une des revendications précédentes, **caractérisé en ce que** les outils de mélange ou de broyage (7a, 7b, 7c, ...) peuvent être commandés ou sont conçus ou agissent sur le matériau de façon à ce que le matériau à traiter se déplace, soit mis en rotation ou forme une trombe de mélange, soit mélangé, chauffé ou, le cas échéant, broyé et soit mis dans un état ramolli, mais reste en permanence en morceaux ou sous la forme de particules et ne fonde pas et/ou **en ce que**, au moins dans la chambre supérieure (6a), le matériau soit également séché et/ou cristallisé.

5. Dispositif selon l'une des revendications précédentes, **caractérisé en ce que** les outils de mélange ou de broyage (7a, 7b, 7c, ...) sont conçus différemment dans les différentes chambres (6a, 6b, 6c, ...) et/ou, le cas échéant, sont disposés sur différentes tiges de rotors (8, 9) et/ou peuvent être commandés indépendamment les uns des autres par l'intermédiaire d'un ou plusieurs dispositifs d'entraînement et, plus particulièrement, tournent avec des vitesses de rotation différentes.

6. Dispositif selon l'une des revendications précédentes, **caractérisé en ce que** tous les outils de mélange ou de broyage (7a, 7b, 7c, ...) sont disposés sur une tige de rotor (8) commune ou **en ce que** les outils de mélange ou de broyage (7a, 7b, 7c, ...) sont répartis sur deux tiges de rotors (8, 9) ou plus, indépendantes l'une de l'autre et entraînées séparément, qui, le cas échéant dépassent au niveau de côtés opposés dans le récipient de logement (1).

7. Dispositif selon l'une des revendications précédentes, **caractérisé en ce que** les moyens (5', 5", ...) sont conçus de façon à garantir, par leur diamètre intérieur, un passage libre, le cas échéant sous la forme d'un labyrinthe, le cas échéant comme des ouvertures ou des diaphragmes pouvant être fermés au moins partiellement ou régulant le flux de matériau ou des moyens de convoyage ou de dosage, plus particulièrement comme des vis sans fin de convoyage ou autres.

8. Dispositif selon l'une des revendications précédentes, **caractérisé en ce que** les moyens (5', 5", ...) sont conçus comme des tronçons de transfert, les tronçons de transfert étant conçus de façon à garantir, par leur diamètre intérieur, un passage libre, le cas échéant des tubes pouvant être fermés au moins partiellement, ou sous la forme de moyens de convoyage ou de dosage, plus particulièrement comme des vis sans fin de convoyage ou autres.

9. Dispositif selon l'une des revendications précédentes, **caractérisé en ce que**, dans au moins une chambre, de préférence dans chaque chambre (6a, 6b, 6c, ...), se trouvent un dispositif d'aspiration (15) pour l'élimination des composants volatils et/ou un dispositif de rinçage avec du gaz inerte ou des gaz réactifs ou autres, le dispositif d'aspiration (15) étant le cas échéant disposé dans les outils de mélange ou de broyage (7a, 7b, 7c, ...).

10. Dispositif selon l'une des revendications précédentes, **caractérisé en ce que**, dans au moins une chambre, de préférence dans chaque chambre (6a, 6b, 6c, ...), se trouve un dispositif de mesure du niveau de remplissage (16).

11. Dispositif selon l'une des revendications précédentes, **caractérisé en ce que** les chambres (6a, 6b, 6c, ...) présentent des diamètres différents et/ou des hauteurs différentes, la chambre supérieure (6a) ou la chambre se trouvant plus haut présentant de préférence une hauteur inférieure à celle des chambres (6b, 6c, ...) situées en dessous dans la direction du flux de matériau.

12. Dispositif selon l'une des revendications précédentes, **caractérisé en ce que** les moyens (5', 5", ..) partent de la chambre supérieure (6a) ou de la chambre située plus haut vers la partie basse ou proche de la base à proximité du fond intermédiaire (2', 2", ...).

13. Procédé de traitement, plus particulièrement d'une matière plastique thermoplastique, par exemple du polyester ou du polyéthylène, à l'aide du dispositif selon l'une des revendications précédentes, le matériau à traiter étant guidés successivement à travers plusieurs chambres (6a, 6b, 6c, ...) successives se trouvant dans un récipient de logement (1) commun, le matériau étant traité, déplacé, mélangé, chauffé et/ou broyé et le cas échéant séché et/ou cristallisé dans chaque chambre (6a, 6b, 6c, ...) avec des outils de mélange ou de broyage (7a, 7b, 7c), pouvant le cas échéant être commandés indépendamment les uns des autres, et mis dans un état ramolli non fondu dans lequel le matériau reste en permanence en morceaux ou sous la forme de particules et est toujours maintenu dans cet état et le matériau étant soumis, après la dernière chambre, à une étape de compression ou étant expulsé vers une extrudeuse (11).
